# EUROPEAN PATENT APPLICATION

(11) **EP 1 628 415 A1**
(43) Date of publication of application: **22.02.2006**
(21) Application number: 04292058.7
(22) Date of filing: 18.08.2004
(51) Int. Cl.: H04B 7/06

(54) **Mobile radio communication system for downlink transmission and method for transmitting a signal across at least two downlink paths of a multiple antenna mobile radio communication system**

(71) Applicant: ALCATEL, 75008 Paris (FR)
(72) Inventor: Braun, Volker, 70178 Stuttgart (DE); Hoek, Cornelis, 71732 Tamm (DE); Russ, Stefan, 73765 Neuhausen (DE)
(74) Representative: Dreiss, Fuhlendorf, Steimle & Becker

(57) **Abstract**

The invention refers to a mobile radio communication system (1) for downlink transmission and to a method for transmitting a signal (s) across at least two downlink paths (5, 6) of a multiple antenna (3, 4) mobile radio communication system (1). The system (1) comprises:
- a base station (2) comprising a plurality of antennas (3, 4) ;
- at least one mobile user equipment (8);
- at least two downlink paths (5, 6) across at least two of the antennas (3, 4) for transmitting a signal (s) from the base station (2) to the at least one user equipment (8), each downlink path (5, 6) comprising a complex channel coefficient (h₁, h₂); and
- a feedback path (9) for returning information on at least one complex weight (w) from the user equipment (8) to the base station (2), the at least one complex weight (w) being used for multiplying the signal (s) which is transmitted across at least two of the downlink paths (6).

In order to enhance the tolerance of the system (1) against transmission errors (11) on the feedback path (9) it is suggested that the antennas (3, 4) of the base station (2) are disposed in such a distance (a) to one another that the channels of the antennas (3, 4) are correlated. It is further suggested that error detection mechanisms for detecting transmission errors (11) are incorporated in the feedback path (9). Further, it is suggested that error correction mechanisms for correcting transmission errors (11) are incorporated in the feedback path (9). Finally, it is suggested that filter mechanisms (19, 20) are incorporated in the user equipment (8) and in the base station (2).

## Description

The present invention refers to a mobile radio communication system for downlink transmission from a base station to a mobile user equipment (a terminal). In principle the invention is also applicable for uplink transmission from user equipment to base station.

In particular, the invention refers to a mobile radio communication system comprising:
- a base station,
- the base station comprising a plurality of antennas;
- at least one mobile user equipment;
- at least two downlink paths across at least two of the antennas for transmitting a signal from the base station to the at least one user equipment,
- each downlink path comprising a complex channel coefficient; and
- a feedback path for returning information on at least one complex weight from the user equipment to the base station,
- the at least one complex weight being used for multiplying the signal which is transmitted across at least two of the downlink paths.

Furthermore, the invention refers to a method for transmitting a signal across at least two downlink paths of a multiple antenna mobile radio communication system comprising the following steps:
- in a user equipment of the mobile radio communication system calculating optimum values for complex weights to be used for transmitting the signal;
- transmitting the optimum values for the complex weights from the user equipment to a base station of the mobile radio communication system across a feedback path;
- in the base station using the optimum values for the complex weights for transmitting the signal.

In the user equipment the signal transmitted by the base station is detected according to a signal received by the user equipment from the downlink paths, and to the optimum values for the complex weights. According to the present invention the wording "downlink path" does not refer to the radio propagation multi-paths across which the signal is actually transmitted, but rather to the connection between sending antenna and receiving antenna.

The present invention is intended to improve downlink system capacity of an UTRA/FDD air interface. UTRA-FDD stands for UMTS Terrestrial Radio Access - Frequency Division Duplex and is a UMTS-standard, which uses paired frequencies. Paired frequency packets consist of two 5MHz-frequency bands, one for the uplink (for the mobile user speaking) and one for the downlink (listening). This is characterized as frequency duplex or FDD-Frequency Division Duplex, because the separation of the downlink channel and the uplink channel is realized by means of the frequency separation. The present invention can be combined with the 4Tx open loop - closed loop Tx diversity scheme proposed in another patent application EP 03 292 038.1 filed on August 18, 2003 in the name of the same applicant.

A multiple antenna transmission is one way to increase downlink capacity, quality and/or coverage. In a multiple antenna transmission the same payload can be transmitted across a number of downlink paths across a corresponding number of antennas. A signal transmitted across a certain downlink path in particular in town centers and in buildings has various ways of propagation which when superposed may lead to a constructive or a destructive superposition (the so-called Rayleigh fading). Further information on the Rayleigh fading can be taken from Sklar, Bernard: Rayleigh Fading Channels in Mobile Digital Communication Systems, IEEE Communications Magazine, July 1997, pages 90 - 100. By using two or more downlink paths, the processes of Rayleigh fading can be compensated between the various downlink paths. This leads to a significant diversity gain, because a slump of the signal received by the user equipment can be effectively prevented. Another method for achieving a diversity gain is, for example, space time coding which works without a feedback path but instead with a specific coding of the signals transmitted.

Each downlink path has a certain physical characteristic which is described by its complex channel coefficient. The complex channel coefficients depend on the channels used for transmission and on the position of the user equipment receiving the transmitted signals. Additionally, the variation of the complex channels over time depends on the velocity of the user equipment. This means, if the user equipment moves faster, the alteration rate of the channel coefficients is larger, too. At the receiving user equipment the various signals transmitted across the various downlink paths are received and are processed in order to obtain the transmitted signal. The signals to be transmitted across the downlink paths are multiplied with complex weights by the base station in order to maximize the received signal power of the transmitted signal at the user equipment. The complex weights influence the amplitude and the phase of the received signal. The optimum complex weights depend on the characteristics of the channel used for transmission (i.e. the complex channel coefficients) and on the position of the user equipment in respect to the base station.

The base station transmits so-called pilot signals across the downlink paths which are received by the user equipment. The pilot signals can be transmitted continuously (e. g. across the "Common Pilot Channel" in UMTS) or from time to time. The user equipment knows the pilot signals and based on that knowledge from the received pilot signals can determine the complex channel coefficients of the various downlink paths. Depending on the complex channel coefficients the user equipment determines optimum values for the complex weights. The optimum values are transmitted to the base station across the feedback path. A method of the kind is known from US 5,634,199, Gerlach, D. et al..

In mobile radio communication systems known in the art, the antennas of the base station are disposed in a relatively large distance from one another, which usually is a multiplicative of the wavelength (λ) of the signal transmitted, for example about 10 x λ to 20 x λ. The idea of the known systems is to dispose the antennas of the base station in such a distance to one another that the signals which are transmitted across the data paths are not correlated. This allows a highly effective diversity gain using the feedback path. However, the known systems have the disadvantage that the optimum values of the complex weights change very fast when the mobile user equipment moves fast in respect to the base station. This means that the optimum values for the complex weights have to be calculated more frequently and, most important, have to be transmitted more frequently to the base stations across the feedback path. Practically, when the speed of the user equipment exceeds a certain value, for example 40 km/h to 50 km/h, the band width of the feedback path is too low and it is no longer possible to provide the actual optimum values for the complex weights to the base station across the feedback path. Inevitably, the base station multiplies the signals to be transmitted across the downlink paths with old values, which for the actual transmission conditions can well be far from optimum. The result is that with the user equipment moving relatively fast in respect to the base station, the diversity gain achieved by means of the feedback path is not very good. Especially when the user equipment moves at high speeds in respect to the base station, the signal received by the user equipment can even deteriorate that much that the quality of the signal is worse than it would be if no diversity gain by means of the feedback path would be applied at all.

For reducing the bandwidth necessary for transmitting the optimum values of the complex weights from the user equipment to the base station, in mobile radio communication systems known in the art, usually a fixed number (i.e. not adjustable to the velocity of the user equipment) of bits is used for transmitting the optimum values to the base station across the feedback path. For example in UMTS only one bit per slot (e. g. 667 µs-slot) is used for transmitting the optimum values to the base station. No error detection and no error correction algorithms are implemented in the feedback path due to the small bandwidth available on the feedback path. Therefore, it can happen that during transmission of the optimum values for the complex weights errors occur, which are neither detected nor corrected, and that the erroneous values are used for multiplying the signals to be transmitted across the various downlink paths.

The user equipment is not aware of the feedback errors and uses the correct coefficients for decoding the signals received. Due to the feedback errors, the base station receives erroneous coefficients, is not aware of the errors and uses the erroneous coefficients for coding the signals to be transmitted. Hence, the base station and the user equipment work with different complex coefficients which, of course, leads to a significant deterioration of the diversity gain and of the quality of the signal received by the user equipment.

Summing up, the diversity gain achieved by means of a feedback path in mobile radio communication systems known in the art works satisfyingly only if the user equipment is static or moves very slowly. Therefore, it is an object of the present invention to provide a mobile radio communication system with a diversity gain by means of a feedback path, which works satisfyingly even when the user equipment moves fast in respect to the base station.

In order to solve this object a mobile radio communication system is suggested comprising the features of claim 1. In particular, a mobile radio communication system of the kind mentioned above is suggested, characterized in that the antennas of the base station are disposed in such a distance to one another that the channels of the antennas are correlated.

With other words, the signals transmitted across those downlink paths, which comprise the antennas disposed to one another in the way mentioned above, are correlated. This means that the phase difference between the complex channel coefficients of the downlink paths in a first approximation only depend on the position of the user equipment in respect to the base station and no longer on the velocity of the movement. Effectively, the optimum values of the complex weights of the downlink paths change much slower than in the mobile radio communication system known in the art, where the antennas are disposed in a relatively large distance to one another and, therefore, the channels of the antennas are not correlated. It is an advantage of the present invention that the bandwidth of the feedback path necessary for achieving a satisfactory combining gain is much smaller than the bandwidth which was necessary for a satisfactory diversity gain in the mobile radio communication system known in the art. The signals transmitted add constructively (in phase).

Accordingly, the present invention works very well and can provide a satisfactory diversity gain even with a small bandwidth of the feedback path. Furthermore, if a larger bandwidth than needed for transmitting the optimum values of the complex weights to the base station, is available on the feedback path, that spare bandwidth can be used for implementing error detection and error correction algorithms in the feedback path. By doing so, the reliability of the data transmission across the feedback path can be decisively increased.

Altogether, the mobile radio communication system according to the present invention is particularly advantageous when the user equipment moves with a relatively high velocity in respect to the base station. With the user equipment moving at high speed, the system works perfectly even if there is only a low bandwidth available on the feedback path. If there is a higher bandwidth available than needed for transmitting the optimum values of the complex weights on the feedback path, the spare bandwidth can be used for implementing error detection and error correction algorithms.

According to a preferred embodiment of the present invention it is suggested that the antennas of the base station are disposed in a distance of half the wavelength (λ/2) of the signals transmitted across the downlink paths. Of course, it is not necessary that all the antennas of the base station are disposed at that distance. It may well be that a first group of antennas is disposed at half the wavelength to one another and a second group of antennas is disposed at half the wavelength to one another, too. Each group of antennas comprises two or more antennas. Both groups of antennas are spaced apart from one another by more than half the wavelength, for example by 10x to 20x the wavelength. Within each group of antennas the channels of the antennas are correlated.

It is further suggested that error detection mechanisms for detecting errors in the transmission of the at least one complex weight are incorporated in the feedback path. These mechanisms comprise an encoding of the optimal values for the complex weights determined in the user equipment and a decoding of the encoded values received in the base station across the feedback path. According to this embodiment it is possible for the base station to reliably tell whether the values received across the feedback path have been transmitted without any errors, in particular without any bit errors. Hard and soft decision decoding can be used for the decoding in the base station. In case of an error detection coding, e.g. single parity check code with hard decision parity check, or CRC (cyclic redundancy check) can be used. In case a transmission error is detected, the received optimum value for the complex weight can be discarded, and instead a weight computed from previously received antenna weights can be used for transmission (so-called error conciliation).

Furthermore, it is suggested that error correction mechanisms for correcting errors in the transmission of the at least one complex weight are incorporated in the feedback path. These mechanisms comprise an encoding of the optimal values for the complex weights determined in the user equipment and a decoding of the encoded values received in the base station across the feedback path. According to this embodiment it is possible for the base station, in case of a detected transmission error, to reliably correct the values received across the feedback path. In particular, bit errors that occurred during transmission across the feedback path are corrected. It is suggested that convolutional coding or block coding is incorporated in the feedback path for forward error correction.

According to yet another preferred embodiment of the present invention, it is suggested that
- the user equipment comprises means for calculating optimum values for the at least one complex weight to be used for transmitting the signal, and
- means for filtering the optimum values for the at least one complex weight according to certain first filter characteristics; and
- the base station comprises means for filtering the optimum values for the complex weights according to certain second filter characteristics which are almost the same as the first filter characteristics, which were used in the user equipment.

Preferably, the filtering of the optimum values almost under the same conditions in the user equipment and in the base station is achieved by using filters with almost the same or identical filter coefficients.

Furthermore, it is suggested that the user equipment comprises means for detecting the transmitted signal according to a signal received by the user equipment from the downlink paths and according to the optimum values for the complex weights, after filtering the optimum values in said means.

Another solution of the object of the present invention is provided by a method comprising the features of claim 9. In particular, it is suggested that a method of the kind mentioned above comprises the steps of:
- in the user equipment encoding the optimum values for the complex weights with an error detection and/ or an error correction algorithm before transmitting them across the feedback path; and
- in the base station decoding the optimum values for the complex weights before using them for transmitting the signal.

Preferred coding schemes for detecting and/ or correcting errors in the transmission of the optimum values across the feedback path include simple block codes such as e.g. single parity check codes, repetition codes, or Hamming codes, convolutional codes, only to name some. Of course, other coding schemes can be used, too.

According to an alternative solution, the object of the present invention is solved by a method comprising the features of claim 11. In particular, it is suggested that a method of the kind mentioned above comprises the steps of:
- in the user equipment filtering the optimum values for the complex weights using certain first filter characteristics; and
- in the base station filtering the optimum values for the complex weights using certain second filter characteristics, which were used in the user equipment, before using the optimum values for the complex weights for transmitting the signal.

Preferably, the filtering of the optimum values almost under the same conditions in the user equipment and in the base station is achieved by using filters with almost the same or identical filter coefficients. According to a preferred embodiment of the invention it is suggested that for filtering a bank of weight filters comprising one weight filter per antenna weight is used, each weight filter comprising a number of filter coefficients.

Further, it is suggested that the filter coefficients are selected such that in case bit errors occur on the feedback path, the values of the complex weights received after filtering in the base station are approximately equal to the optimum values of the complex weights obtained after filtering in the user equipment.

Hereinafter a number of preferred embodiments of the present invention is described in greater detail taking into consideration the following drawings.
- Fig. 1: shows a mobile radio communication system according to the present invention;
- Fig. 2: shows a base station and a user equipment of the mobile radio communication system according to Fig. 1 in detail;
- Fig. 3: shows the mobile radio communication system according to Fig. 2 comprising error detection and/or error correction algorithms according to a first preferred embodiment; and
- Fig. 4: shows the mobile radio communication system according to Fig. 2 with a filter with certain filter coefficients according to a second preferred embodiment.

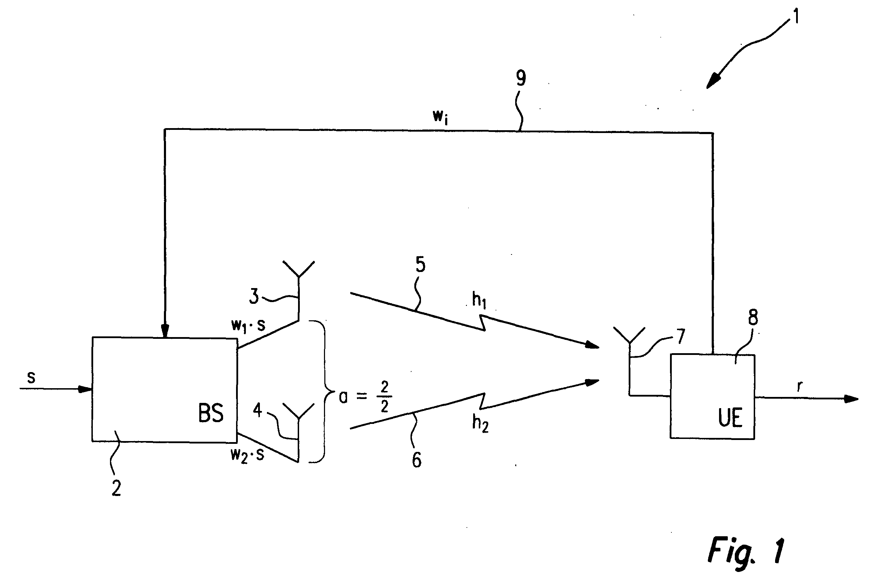

In Fig. 1 a mobile radio communication system according to the present invention is designated with reference sign 1. The communication system 1 comprises a base station 2, which in a mobile radio communication system 1 working according to the UMTS-standard is referred as Node B. The base station 2 comprises two antennas 3, 4, which are used for transmitting data across two downlink paths 5, 6. The data transmitted across the downlink paths 5, 6 is received from an antenna 7 of a user equipment 8 being part of the mobile radio communication system 1. A signal to be transmitted across the two downlink paths 5, 6 is referred to as signal s. Signal s is multiplied with complex weights wᵢ (i = 1, 2) and then transmitted across the two downlink paths 5, 6. The downlink paths 5, 6 have certain physical characteristics depending on the channels used for the data transmission and on the position of the user equipment 8 in respect to the base station 2. The physical characteristics of the downlink paths 5, 6 are expressed by complex channel coefficients hᵢ (i = 1, 2).

The signal s is transmitted across more than one downlink path 5, 6 in order to achieve a diversity gain by compensating the Rayleigh fading of the two channels used for data transmission. The user equipment 8 has no information concerning the complex channel coefficients hᵢ of the downlink paths 5, 6. In order to allow the user equipment 8 to determine the physical characteristics of the downlink paths 5, 6 and the complex channel coefficients hᵢ, the base station 2 sends defined pilot signals to the user equipment 8. This can be done continuously (e. g. across the "Common Pilot Channel" in UMTS) or from time to time. The user equipment 8 knows what the pilot signals transmitted by the base station 2 should be like. By comparing the pilot signals transmitted by the base station 2 with the pilot signals received across the downlink paths 5, 6, the user equipment 8 can determine the complex channel coefficients hᵢ. Taking into consideration the complex channel coefficients hᵢ, the user equipment 8 can determine optimum values for the complex weights wᵢ. The optimum values of the complex weights wᵢ are determined in order to maximize the absolute value of the received signal r. The optimum values for the complex weights wᵢ are transmitted to the base station 2 across a feedback path 9.

The above-described way for achieving a diversity gain is called closed loop diversity scheme. Of course, the closed loop diversity scheme also works well with more than the two antennas 3, 4 of the base station 2 shown in Fig. 1. In that case the signal s is transmitted across more than two downlink paths 5, 6. The user equipment 8 determines the complex channel coefficients hᵢ for all of the downlink paths and the complex weights wᵢ for all antennas of the base station 2. An important aspect of the present invention is the fact that the two antennas 3, 4 of the base station 2 are disposed in such a distance a to one another that the channels of the antennas 3, 4 are correlated. In particular, it is suggested that the antennas 3, 4 are disposed in a distance a corresponding to half of the wavelength λ (a = λ/2) of the signal transmitted across the downlink paths 5, 6.

The present invention is described for a mobile radio communication system 1 for downlink transmission from the base station 2 to the user equipment 8. Of course, the invention can also be applied for uplink data transmission from the user equipment 8 to the base station 2.

The basic idea of closed loop transmission diversity-beam forming is that the complex weights wᵢ (i. e. the signals transmitted by the base station 2 via different transmitting antennas 3, 4 are multiplied with complex-valued weights wᵢ, such that the signals add constructively at the receiving antenna 7 of the user equipment 8) used for transmission are controlled by means of feedback information transmitted by the user equipment 8 to the base station 2.

The prior art closed loop schemes are mainly focusing on closed loop transmission diversity, therefore, usually have antennas spaced apart from one another in a distance of approximately 10 to 20 times the wavelength λ of the transmitted signals. Due to the large antenna spacing (uncorrelated channel fading for different antennas), the optimum antenna weights wᵢ change quickly during movement of the user equipment 8. The change rate increases with increasing velocity of the user equipment 8 and with increasing antenna spacing. Thus, in the closed loop transmission diversity schemes known in the art, the complex antenna weights have to be updated frequently, and, therefore, the feedback signaling path 9 is designed in a way to minimize signaling delay. The feedback path 9 of prior art mobile radio communication systems is not designed to be tolerant against transmission errors, because that would introduce additional latency. However, latency would degrade error rate performance and, therefore, is undesirable. No error detection and no error correction algorithms are implemented in the feedback path due to the small bandwidth available on the feedback path.

The present invention suggests a way for optimizing closed loop beamforming performance. It is assumed that a dedicated closed loop beamforming mode may be introduced in the system standards, or that the closed loop beamforming scheme may be used as a building block of another multiple antenna transmission scheme, such as e. g. the 4Tx OL (open loop)-CL (closed loop) scheme described in EP 03 292 038.1 or Fujitsu's "Closed Loop Tx Diversity Scheme with Beamforming Feature" described in 3 GPP TR 25.869, Third Generation Partnership Project: Technical Specification Group Radio Access Network; Tx Diversity Solutions for Multiple Antennas.

Feedback transmission errors cannot be avoided. In UTRA/FDD (UMTS Terrestrial Radio Access - Frequency Division Duplex) a feedback bit error rate of typically 4 % or higher is normal. The occurrence of transmission errors in the feedback path 9 causes the transmitter in the base station 2 to use complex weights wᵢ deferring from those signaled by the receiver of the user equipment 8 as the optimum complex weight values. As a result, in the mobile radio communication systems known in the art, the error rate deteriorates and thus system capacity is lost.

Furthermore, a signal processing technique called antenna verification is known in the art (cf. e. g. 3 GPP TS 25.214). This known technique can be used in the receiver of the user equipment 8 to partly compensate for wrongly selected complex weights. With this technique, the receiver of the user equipment 8 tries to reconstruct which weights were used by the transmitter of the base station 2 by means of measurements and signal processing. However, this scheme does not prevent the transmitter of the base station 2 from using wrong weight vectors, and, thus, the overall performance of the system is limited. Further, this technique has a significant complexity, which is complicated and expensive.

The idea of the present invention is to introduce a mechanism into the closed loop beamforming scheme which actively compensates for transmission errors occurring on the feedback path 9. One aim is that the complex weights wᵢ used for transmission by the base station 2 are equal with a high probability or approximately equal to the weights used by the user equipment 8 for signal detection.

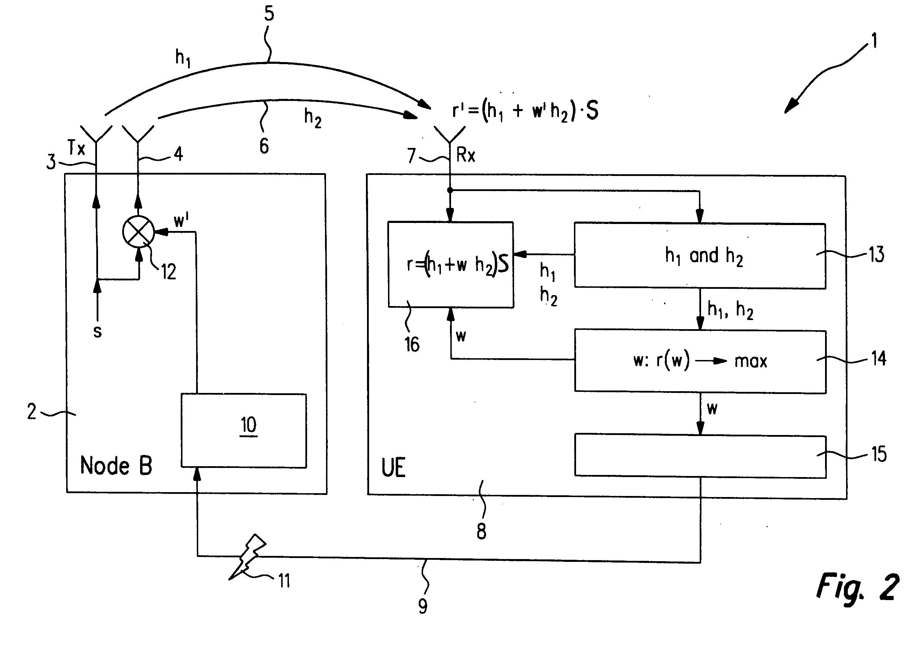

Fig. 2 shows the mobile radio communication system 1, and in particular the base station 2 and the user equipment 8 in more detail. In the embodiment shown in Fig. 2, the complex weight W₁ = 1 and the complex weight w₂ = w. Hence, the signal r received at the user equipment 8 has the equation: r = (h₁ + w x h₂)S. The base station 2 comprises a feedback information receiver 10, which receives the optimum value for the complex weight w transmitted from the user equipment 8 across the feedback path 9. Due to the fact that there are feedback transmission errors 11, e. g. bit errors, on the feedback path 9, a wrong value for the complex weight w' is received instead of the correct value w. The signal s is multiplied with the wrong value of the complex weight w' in a multiplication point 12 within the base station 2 and transmitted across the second antenna 4 and the second downlink path 6 to the antenna 7 of the user equipment 8. The user equipment 8 does not receive the correct receiving signal r, but rather a wrong signal r' which is r' = (h₁ + w' x h₂)S. The quality of the signal r' received by the user equipment 8 is most probably worse than the quality of the signal r it should have received. This reduction in quality is due to the fact that due to the wrong complex weight w' used for transmitting the data across the downlink path 6, the diversity gain will most probably not be at its optimum.

Provided that the user equipment 8 receives the correct signal r = (h₁ + w x h₂)S, in a functional block 13 the channel characteristics for the downlink paths 5, 6 and the complex channel coefficients hᵢ are determined. Depending on the channel coefficients hᵢ the optimum value for the complex weight w can be determined in another functional block 14 so that the received signal r reaches its maximum. The optimum value for the complex weight w is transmitted to a feedback information transmitter 15, which then transmits the optimum value to the base station 2 across the feedback path 9. The complex channel coefficients hᵢ determined in the functional block 13 and the optimum value for the complex weight w determined in the functional block 14 are transmitted to another functional block 16 for detecting the signal s from the received signal r. The functional block 16 can be, e. g., a Rake receiver.

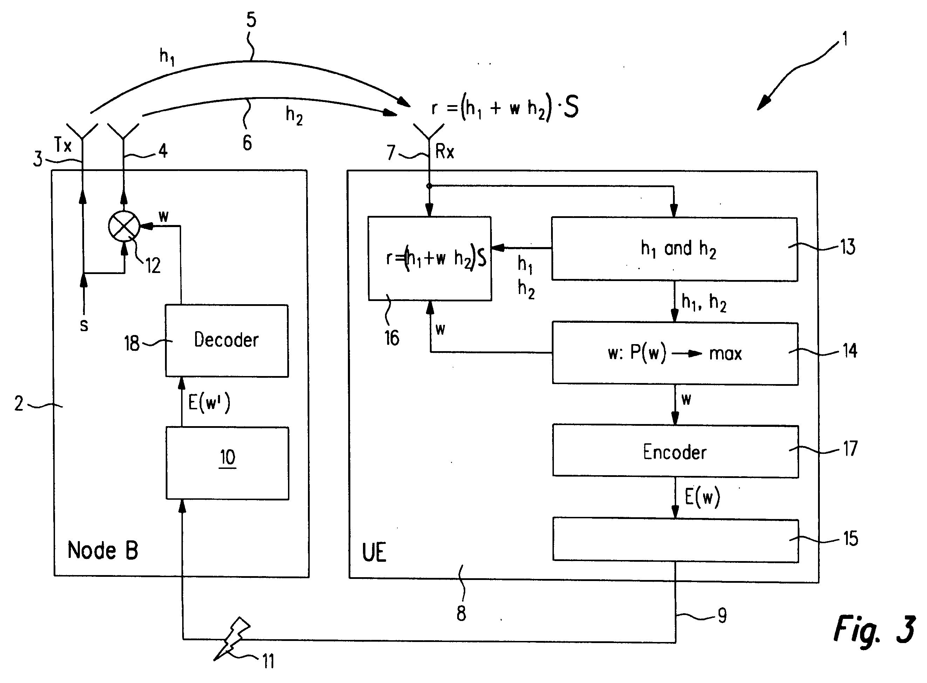

Fig. 3 shows the mobile radio communication system 1 according to Fig. 2 in a first embodiment. This embodiment uses an error detection coding or an error correction coding to protect the bits transmitted on the feedback path 9 against transmission errors 11. Possible coding schemes include simple block codes such as e. g., single parity check codes, repetition codes, Hamming codes, or convolutional codes.

After computation of the optimum weights w in functional block 14, the user equipment 8 in an encoder 17 performs an encoding operation and signals the encoded weights E(w) via the feedback path 9 to the base station 2. The base station 2 decodes the received feedback information E(w') in a decoder 18 and obtains the weight w to be applied for the downlink transmission to the user equipment 8. It is noted that although there are feedback transmission errors 11 on the feedback path 9, and although the received feedback information E(w') has been affected by the feedback transmission errors 11, the error correction coding and decoding implemented in the encoder 17 and the decoder 18 manages to extract the correct complex weight w from the received feedback information E(w'). Hard or soft decision decoding can be used for the decoding in base station 2. In case of error correction coding (cf. Fig. 3), bit errors 11 that occurred during transmission can be corrected. In case of error detection coding, e. g., single parity check code with hard decision parity check, or cyclic redundancy check (CRC), not shown in Fig. 3, it can be detected, whether during transmission bit errors occurred, in which case the received (erroneous) complex weight w' is discarded, and instead a complex weight w computed from previously received complex weights w is used for download transmission (so-called error conciliation). The embodiment shown in Fig. 3 improves the reliability of the feedback signaling at the expense of additional signaling delay.

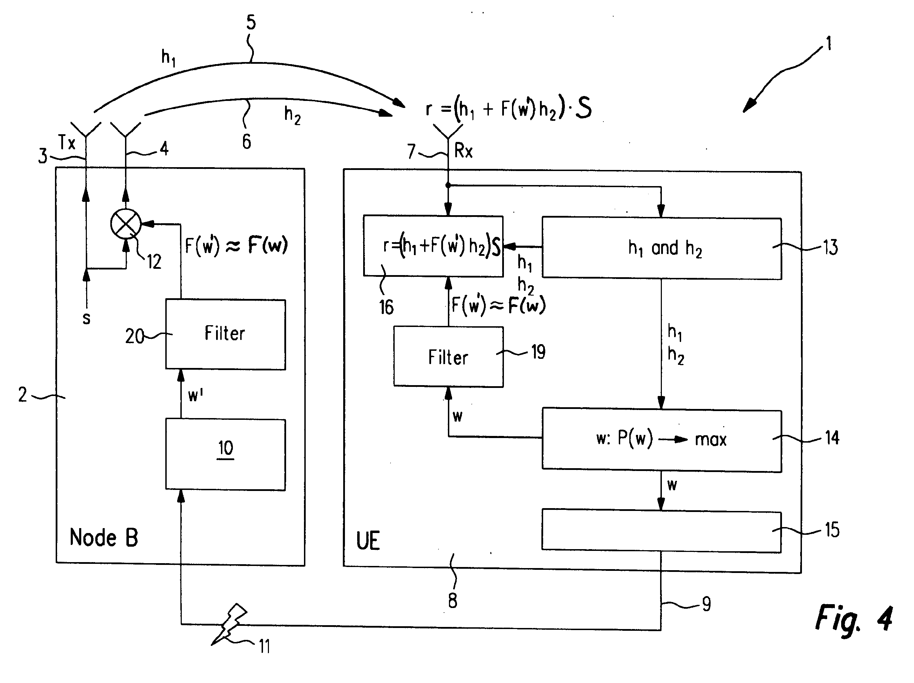

Fig. 4 shows a second embodiment of the mobile radio communication system. 1 according to Fig. 2. This embodiment uses a bank of weight filters, one weight filter per antenna weight w, both in the base station 2 and in the user equipment 8. Typically, the number of weight filters corresponds to the number of sending antennas 3, 4 minus one. A weight filter according to this embodiment is intended to process the complex-valued antenna weights w. For feedback transmission the complex weights w are commonly represented by tuples of n bits, n typically being a number between 2 and 4.

The optimum values for the complex weight w computed by the user equipment in the functional block 14 are signaled to the base station 2 across the feedback path 9. In the user equipment 8, the optimum values of the complex weights w computed by the functional block 14 in the user equipment 8 are fed through the bank 19 of filters, and the weights F(w) obtained after filtering are used for signal detection in functional block 16. In the base station 2 the antenna weights w' received by the base station 2 are fed through a bank 20 of filters, and the weights F(w) obtained after filtering are used for downlink transmission. In case of feedback bit errors 11, the weight F(w') obtained after filtering in base station 2 is approximately equal to the weight F(w) after filtering in the user equipment 8, provided the feedback error rate is not excessive.

This second embodiment improves the quality of the transmission across the downlink paths 5, 6 at the expense of a reduced reactivity, i. e. the ability of the transmitter of the base station 2 to react on fast changes of the antenna weights w is reduced.

With closed loop beam forming, additional signaling delay and reduced reactivity to weight updates are acceptable. Due to the small antenna spacing (correlated channel fading for different antennas 3, 4), the optimum antenna weights w change comparatively slowly during movement of the user equipment 8. Therefore, the proposed embodiment results in an overall performance benefit of the whole system 1.

It is noted that with about 4 % feedback bit error rate, and typically two to four bits used per antenna weight w, often only a single bit error needs to be corrected and/or compensated. This can be achieved with, e. g., a single parity check code, which only requires one extra bit per antenna weight w, and soft decision parity check decoding.

The additional delay for such a scheme is uncritical for beamforming applications, where latencies in the size of a couple of 100 ms are common practice (e. g., DOA (direction of arrival) based beamforming). With the proposed solutions, the user equipment 8 can optionally apply antenna verification algorithms.

The present invention improves the error rate performance of closed loop beamforming schemes, thus improving downlink capacity, link quality and coverage. The proposed closed loop beamforming scheme is beneficially applicable to data transmission across the physical channels of the Dedicated Channel (DCH), the High Speed Downlink Shared Channel (HS-DSCH) and the Downlink Shared Channel (DSCH), just to name a few. Furthermore, it is applicable to transmission of control information across the High Speed Downlink Shared Control Channel (HS-SCCH), just to name one. Combining this scheme with the 4Tx OL-CL diversity scheme of EP 03 292 038.1, is possible, too, and will result in a especially advantageous mobile radio communication system. The present invention has a low implementation complexity, both in the base station 2 and in the user equipment 8.

## Claims

1. Mobile radio communication system (1) comprising:
- a base station (2),
- the base station (2) comprising a plurality of antennas (3, 4);
- at least one mobile user equipment (8);
- at least two downlink paths across at least two of the antennas, for transmitting a signal (s) from the base station (2) to the at least one user equipment (8),
- each downlink path comprising a complex channel coefficient (h_1, h_2); and
- a feedback path (9) for returning information on at least one complex weight (w) from the user equipment (8) to the base station (2),
- the at least one complex weight (w) being used for multiplying the signal (s) which is transmitted across at least two of the downlink paths (5, 6),
**characterized in that**
the antennas of the base station (2) are disposed in such a distance (a) to one another that the channels of the antennas (3, 4) are correlated.

2. Mobile radio communication system (1) according to claim 1, **characterized in that** the antennas (3, 4) of the base station (2) are disposed in a distance of half the wavelength (λ/2) of the signals transmitted across the downlink paths (5, 6).

3. Mobile radio communication system (1) according to claim 1 or 2, **characterized in that** error detection mechanisms for detecting errors in the transmission of the at least one complex weight (w) are incorporated in the feedback path (9).

4. Mobile radio communication system (1) according to at least one of the claims 1 to 3, **characterized in that** error correction mechanisms for correcting errors in the transmission of the at least one complex weight (w) are incorporated in the feedback path (9).

5. Mobile radio communication system (1) according to claim 4, **characterized in that** convolutional coding or block coding, using in particular single parity check codes, repetition codes, or Hamming codes, is incorporated in the feedback path (9).

6. Mobile radio communication system (1) according to claim 1, **characterized in that**
- the user equipment (8) comprises means (14) for calculating optimum values for the at least one complex weight (w) to be used for transmitting the signal (s), and
- means (19) for filtering the optimum values for the at least one complex weight (w) according to certain first filter characteristics; and
- the base station (2) comprises means (20) for filtering the optimum values for the complex weights (w) according to certain second filter characteristics which are almost the same as the first filter characteristics, which were used in the user equipment (8) .

7. Mobile radio communication system (1) according to claim 6, **characterized in that** the filtering means (19) in the user equipment and the filtering means (20) in the base station (2) are filters with almost the same or identical filter coefficients.

8. Mobile radio communication system (1) according to claim 6 or 7, **characterized in that** the user equipment (8) comprises means (16) for detecting the transmitted signal (s) according to a signal (r) received by the user equipment (8) from the downlink paths (5, 6) and according to the optimum values for the complex weights (w), after filtering the optimum values in said means (19).

9. Method for transmitting a signal (s) across at least two downlink paths (5, 6) of a multiple antenna (3, 4) mobile radio communication system (1) comprising the following steps:
- in a user equipment (8) of the mobile radio communication system (1) calculating optimum values for complex weights (w) to be used for transmitting the signal (s);
- transmitting the optimum values for the complex weights (w) from the user equipment (8) to a base station (2) of the mobile radio communication system (1) across a feedback path (9);
- in the base station (2) using the optimum values for the complex weights (w) for transmitting the signal (s),
**characterized by** the following steps:
- in the user equipment (8) encoding the optimum values for the complex weights (w) with an error detection and/ or an error correction algorithm before transmitting them across the feedback path (9); and
- in the base station (2) decoding the optimum values for the complex weights (w) before using them for transmitting the signal (s).

10. Method according to claim 9, **characterized in that** the coding schemes for error detection and/ or error correction comprise simple block codes, in particular single parity check codes, repetition codes, or Hamming codes, or convolutional codes.

11. Method for transmitting a signal (s) across at least two downlink paths (5, 6) of a multiple antenna (3, 4) mobile radio communication system (1) comprising the following steps:
- in a user equipment (8) of the mobile radio communication system (1) calculating optimum values for complex weights (w) to be used for transmitting the signal (s);
- transmitting the optimum values for the complex weights (w) from the user equipment (8) to a base station (2) of the mobile radio communication system (1) across a feedback path (9); and
- in the base station (2) using the optimum values for the complex weights (w) for transmitting the signal (s),
**characterized by** the following steps:
- in the user equipment (8) filtering (19) the optimum values for the complex weights (w) using certain first filter characteristics; and
- in the base station (2) filtering (20) the optimum values for the complex weights (w) using certain second filter characteristics, which were used in the user equipment (8), before using the optimum values for the complex weights (w) for transmitting the signal (s).

12. Method according to claim 11, **characterized in that** in the user equipment (8)
- the transmitted signal (s) is detected (16) according to a signal (r) received by the user equipment (8) from the downlink paths (5, 6) and according to the optimum values for the complex weights (w); and
- the optimum values for the complex weights (w) are filtered (19) before detecting the transmitted signal (s).

13. Method according to claim 11 or 12, **characterized in that** for filtering a bank (19, 20) of weight filters comprising one weight filter per complex weight (w) is used, each weight filter comprising a number of filter coefficients.

14. Method according to at least one of the claims 11 to 13, **characterized in that** the filter coefficients are selected such that in case of bit errors on the feedback path (9), the optimum values of the complex weights (w) received after filtering (20) in the base station (2) are approximately equal to the optimum values of the complex weights (w) obtained after filtering (19) in the user equipment (8).
